# EUROPEAN PATENT SPECIFICATION

(11) **EP 3 864 993 B1**
(45) Date of publication and mention of the grant of the patent: **14.06.2023**
(21) Application number: 19938106.2
(22) Date of filing: 24.12.2019
(51) Int. Cl.: A43D 25/20, B29D 35/10, B29C 65/14, B29D 35/06, B29D 35/08, A43B 9/20

(54) **METHOD FOR MANUFACTURE OF SHOE AND SHOE**
VERFAHREN ZUR HERSTELLUNG EINES SCHUHS UND SCHUH
PROCÉDÉ DE FABRICATION DE CHAUSSURE ET CHAUSSURE

(43) Date of publication of application: 18.08.2021
(73) Proprietor: ASICS Corporation, Kobe-shi, Hyogo 650-8555 (JP)
(72) Inventor: TANABE, Tatsuro, Kobe-shi, Hyogo 650-8555 (JP)
(74) Representative: Stolmár & Partner Patentanwälte PartG mbB
(86) International application number: PCT/JP2019/050616
(87) International publication number: WO 2021/130857

(56) References cited:
- EP-A1- 2 489 497
- EP-A1- 3 053 471
- EP-A1- 3 424 361
- WO-A2-99/24498
- JP-A- H11 113 607
- JP-A- 2018 089 971

## Description

### FIELD

The present invention relates to a method for producing a shoe using microwave irradiation, and a shoe that can be produced by the method.

### BACKGROUND

In the process of producing shoes, a method in which a hot melt bond used for causing a plurality of shoe members to be bonded to each other is irradiated with microwaves to be thereby heated and molten is sometimes used to cause the plurality of shoe members to be bonded to each other.

Such a microwave heating method has an advantage that only the hot melt bond, which is a bonding element, can be selectively heated while the shoe members, which are objects to be bonded, are suppressed from being heated at the time of their bonding. For example, JP 2017-061143 A discloses a method for producing shoe members by providing a hot melt bond layer between a plurality of foamed thermoplastic polyurethane particles and a surface of rubber or the like, followed by microwave-heating the hot melt bond layer by microwave irradiation to thereby cause the polyurethane particles and the surface to be bonded to each other.

In the conventional method, however, the selectable hot melt bonds are limited to those composed of a thermoplastic that can be heated and molten by absorption of irradiated microwaves. Therefore, there has been a problem that the shoe members that can be bonded to each other by the method are limited to those shoe members having bonded surfaces that can be favorably bonded to such a thermoplastic.

Other documents such as EP 2489497 A, JP H11 113607 A and JP 2018 089971 A disclose methods for manufacturing articles by using radiation energy in order to melt polymer materials and/or adhesives.

Thus, demanded has been a method for increasing the usable bonding elements in the process of producing shoes using the microwave heating method.

### SUMMARY

### Technical Problem

It is an object of the present invention to provide a method for enabling shoe members to be easily bonded to each other by microwave heating while a thermoplastic that is in general hardly heated by microwaves is used as a bonding element of the shoe members. It is also an object of the present invention to provide a shoe that can be easily produced by the aforementioned method.

### Solution to Problem

The present invention provides a method for producing a shoe, according to the subject-matter of independent claim 1.

A shoe according to the present invention is disclosed by the features of independent claim 9.

### BRIEF DESCRIPTION OF DRAWINGS

Fig. 1 is a side view showing a form of an adapter that can be used for a method for producing a shoe, and a shoe, of one embodiment.
Fig. 2 is a side view showing another form of the adapter that can be used for the method for producing the shoe, and the shoe, of the present disclosure.
Fig. 3 is a side view showing still another form of the adapter that can be used for the method of producing the shoe, and the shoe, of the embodiment.
Fig. 4 is a side view showing still another form of an adapter that can be used for the method of producing the shoe, and the shoe, of the embodiment.
Fig. 5 is a schematic view illustrating a contacting step in the embodiment of the method for producing the shoe.
Fig. 6 is a schematic view illustrating a bonding step in the embodiment of the method for producing the shoe.
Fig. 7 is a side view illustrating the shoe in the embodiment of the method for producing the shoe, and the shoe.

### DESCRIPTION OF EMBODIMENTS

### (Method for producing shoe)

An embodiment of the present invention will be hereinafter described. In a method for producing a shoe of this embodiment, an adapter is used. In the method for producing the shoe of this embodiment, a first shoe member and a second shoe member are bonded to each other using the adapter. The adapter at least includes a first thermoplastic and an energy absorber having a higher dielectric loss factor than that of the first thermoplastic. The adapter has a first surface and a second surface opposite to the first surface, and has the first thermoplastic exposed at least on the first surface. In the method for producing the shoe of this embodiment, a preparation step of preparing such an adapter is performed.

Further performed in the method for producing the shoe of this embodiment is a contacting step of bringing a first bonded surface formed on the first shoe member into abutting contact with the first surface of the adapter, and bringing a second bonded surface formed on the second shoe member into abutting contact with the second surface of the adapter.

Further performed after the contacting step in the method for producing the shoe of this embodiment is a bonding step of heating and melting the adapter by irradiating the adapter with microwaves to cause the first shoe member and the second shoe member to be bonded to each other via the adapter.

In the description herein on the method for producing the shoe, the simple term "microwave(s)" refers to those microwaves irradiated in the bonding step in which microwave irradiation is performed, unless otherwise specified. Similarly, in the description herein on each of the embodiments, the term "dielectric loss factor" refers to a dielectric loss factor relative to the frequency of the microwaves. This dielectric loss factor can be obtained by measurement using an LCR meter or measurement by a cavity resonator perturbation method, although depending on the frequency of microwaves.

This method enables the thermoplastic included in the adapter to be heated and molten by the heat of the energy absorber heated by microwaves. This allows the shoe members to be easily bonded to each other by microwave heating while a thermoplastic that is in general hardly heated by microwaves is used as the bonding element of the shoe members.

### (Adapter)

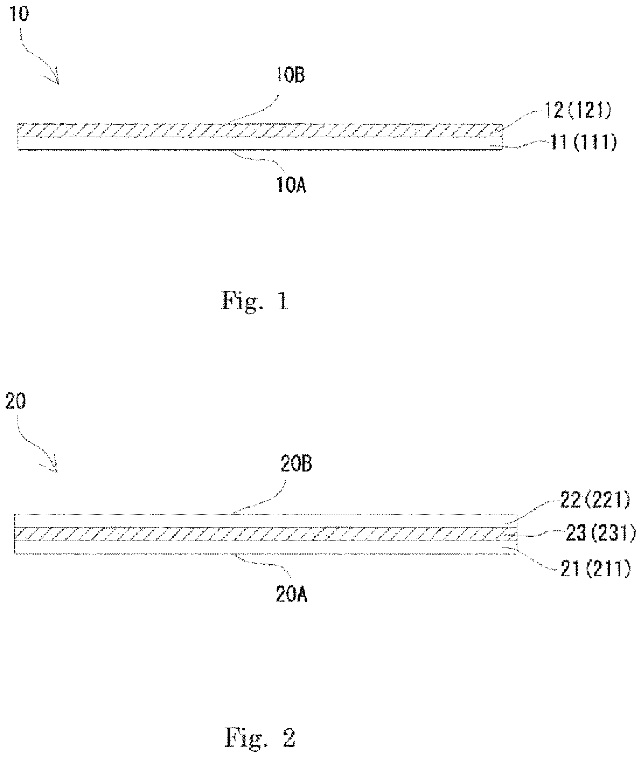

First, the adapter used in the method for producing the shoe of this embodiment will be described with reference to the examples shown in Fig. 1 to Fig. 4.

The adapter at least includes the first thermoplastic and the energy absorber having a higher dielectric loss factor than that of the first thermoplastic. The adapter has the first surface and the second surface opposite to the first surface, and has the first thermoplastic exposed at least on the first surface.

The first thermoplastic is at least bonded to the bonded surface of the first shoe member (hereinafter referred to also as the first bonded surface) on the first surface of the adapter. The first thermoplastic can be any resin that can be bonded to the first bonded surface. Such a resin can be any thermoplastic including, for example, a polyolefin resin such as a polyethylene (PE) resin or a polypropylene (PP) resin, a thermoplastic polyurethane (TPU) resin, a polystyrene (PS) resin, an ethylene-propylene rubber (EPDM), a polyether block amide (PEBA) resin, a polyester (PEs) resin, an ethylene vinyl acetate (EVA) resin, and a polyamide (PA) resin. Preferably, a resin that has a melting point or a softening point falling within a range of 70 ° C to 140 ° C to function as a hot melt bond is selected as the first thermoplastic. Use of such a resin enables the first thermoplastic to be easily and efficiently heated and molten in the subsequent bonding step. Further, the first thermoplastic is preferably the same kind of resin as the resin exposed on the first bonded surface in terms of its bonding capability to the first shoe member. For example, in the case where an EVA resin is exposed on the first bonded surface, the first thermoplastic can also be an EVA resin.

The energy absorber can be any material that has a higher dielectric loss factor than that of the first thermoplastic and can generate heat by absorbing microwaves. The energy absorber is appropriately selected depending on the frequency of irradiated microwaves. The energy absorber may be, for example, a thermoplastic such as a thermoplastic polyurethane (TPU) resin or a polyamide (PA) resin, may be a thermosetting resin such as a thermosetting polyurethane-based elastomer, an acrylic elastomer, a crosslinked rubber, a silicone-based elastomer, or a fluorine-based elastomer, or may be a non-resin material such as water, magnesium oxide, or titanium oxide. The energy absorber can preferably be a thermoplastic that differs in kind from the first thermoplastic. For example, in the case where the first thermoplastic is an EVA resin, the energy absorber may be a TPU resin. In the case where the energy absorber is a thermoplastic, it is more preferable that a resin that has a melting point or a softening point falling within a range of 70 ° C to 140 ° C to function as a hot melt bond be selected. Use of such a resin enables the energy absorber to be easily and efficiently heated and molten in the subsequent bonding step.

The dielectric loss factor of the energy absorber is preferably 0.01 (εr·tanδ) or more. In this case, the energy absorber can be efficiently heated by microwave irradiation. The dielectric loss factor of the energy absorber is more preferably 0.1 (εr·tanδ) or more. The dielectric loss factor of the first thermoplastic may be 0.01 or more lower, or 0.1 or more lower, than the dielectric loss factor of the energy absorber.

The adapter may include any component other than the first thermoplastic and the energy absorber. According to the claimed invention, the adapter includes an additional thermoplastic that differs from the first thermoplastic and the energy absorber. The adapter may further include a chemical such as a pigment, an antioxidant, or a ultraviolet absorber.

As aforementioned, the first surface of the adapter is bonded to the bonded surface of the first shoe member, and has the first thermoplastic exposed thereon. The second surface of the adapter, which is a surface that is bonded to the bonded surface of the second shoe member (hereinafter referred to also as the second bonded surface), may have the first thermoplastic exposed thereon, or may have a second resin exposed thereon in addition to or in substitution for the first thermoplastic. The second resin differs from the first thermoplastic, and is preferably a second thermoplastic.

In the case where the second resin different from the first thermoplastic is exposed on the second surface of the adapter, it is possible that the first shoe member having the first bonded surface capable of being bonded to the first thermoplastic be bonded to the first surface of the adapter, and at the same time the second shoe member having the second bonded surface possibly incapable of being bonded to the first thermoplastic but capable of being bonded to the second resin be bonded to the second surface of the adapter. That is, use of such an adapter enables two shoe members having different bonding capabilities to a resin to be bonded to each other via the adapter.

According to the claimed invention, the first thermoplastic is present at a higher ratio than the second resin different from the first thermoplastic on the first surface of the adapter, and the second resin is present at a higher ratio than the first thermoplastic on the second surface of the adapter. This enables the first thermoplastic to more effectively exhibit its bonding capability on the first surface, and the second resin to more effectively exhibit its bonding capability on the second surface. The ratios of the respective resins present on the first and second surfaces can be measured, for example, using Fourier-transform infrared spectroscopy (FT-IR) by the diamond ATR method.

The second resin exposed on the second surface may be the aforementioned energy absorber. That is, the adapter may include the first thermoplastic and the second resin having a higher dielectric loss factor than that of the first thermoplastic, and may have the first surface on which the first thermoplastic is exposed, and the second surface on which the second thermoplastic is exposed. In such a case, the second resin that controls the bonding capability of the second bonded surface serves also as the energy absorber; thus, an adapter capable of being easily heated by microwaves can be prepared while reducing the use of materials that do not contribute to the bonding function.

The second resin may be still another material that differs from the first thermoplastic and the abovementioned energy absorber. That is, the adapter may include the first thermoplastic exposed on the first surface, the second resin exposed on the second surface, and the energy absorber, which are different from one another.

The thickness of the adapter is not particularly limited, but is preferably 100 pm or more in order to secure the amount of thermoplastic included in the adapter. The thickness is preferably 1,500 pm or less in consideration of the influence on the flexibility of the shoe. The distance in the adapter between the first thermoplastic and the energy absorber is preferably within 50 pm in order to allow the heat of the microwave-heated energy absorber to be easily transferred to the first thermoplastic. In the case where the adapter includes a material (for example, the second thermoplastic) to be heated by the energy absorber, in addition to the first thermoplastic, it is preferable that the distance between such a material and the energy absorber be similarly within 50 pm.

The thickness of the adapter may be modified depending on the portions thereof, in consideration of, for example, the flexibility required for the adapter. For example, the portions of the adapter corresponding to the portions of the shoe member that support the MP joints and their adjacent areas or the like of a foot of a standard wearer (i.e., flexibility imparting portions) may have a small thickness.

Fig. 1 shows an example of the adapter. An adapter 10 includes a first preliminary sheet 11 composed mainly of a first thermoplastic 111, and a second preliminary sheet 12 composed mainly of a second thermoplastic 121 that differs in kind from the first thermoplastic 111, in which the first preliminary sheet 11 and the second preliminary sheet 12 are laminated on each other. That is, in this example, the first thermoplastic 111 is exposed on one surface (a first surface 10A) of the adapter, and the second thermoplastic 121 is exposed on the other surface (a second surface 10B) of the adapter. In this example, the second thermoplastic 121 functions as the energy absorber.

It is preferable that the first preliminary sheet 11 and the second preliminary sheet 12 be bonded to each other by any method. In this case, the adapter 10 is easily handled. For example, the first preliminary sheet 11 and the second preliminary sheet 12 may be bonded to each other via a primer. Examples of the primer used for causing these adapters 11 and 12 to be bonded to each other include an EVA-based primer including EVA. The primer may be a water-based primer such as a polyolefin-based emulsion, an EVA-based emulsion, an acrylic emulsion, or a urethane-based emulsion; an acrylic resin-based primer; a polyamide-based primer; an olefin-based primer; a phenol resin-based primer; a polyester-based primer; a polyurethane-based primer; or a chloroprene rubber-based primer. Alternatively, the first preliminary sheet 11 and the second preliminary sheet 12 may be bonded to each other only by the bonding force of the resins 111 and 121 themselves exposed on the surfaces contacting each other of these preliminary sheets 11 and 12, or may be bonded to each other by heating and melting of the resins 111 and 121.

The first preliminary sheet 11 and the second preliminary sheet 12 may be integrated with each other by any method other than the bonding. Further, the first preliminary sheet 11 and the second preliminary sheet 12 are not necessarily integrated with each other, and an aggregate of the two separate preliminary sheets 11 and 12 that are superposed on each other may be defined as the adapter 10. In this case, the two preliminary sheets 11 and 12 are integrated with each other at the time of microwave irradiation.

The first and second preliminary sheets 11 and 12 each have a thickness appropriately selected depending on the thickness of the adapter 10, and the thickness may fall within, for example, a range of 150 pm to 1,000 pm. The thickness of the first preliminary sheet 11 and the thickness of the second preliminary sheet 12 may be equal to each other, or may be different from each other. These thicknesses may be changed depending on the portions of the adapter 10, in consideration of, for example, the flexibility required for the adapter 10. For example, the portions of the first preliminary sheet 11 and the second preliminary sheet 12 respectively corresponding to the flexibility imparting portions of a shoe member can each have a small thickness.

Fig. 2 shows another example of the adapter. An adapter 20 includes first and second preliminary sheets 21 and 22 mainly composed respectively of first and second thermoplastics 211 and 221, and a third preliminary sheet 23 mainly composed of a third thermoplastic 231 that differs in kind from the first thermoplastic 211 and provided between the first and second preliminary sheets 21 and 22, in which these three preliminary sheets are laminated in order of the first preliminary sheet 21, the third preliminary sheet 23, and the second preliminary sheet 22 from the bottom. In this example, the third thermoplastic 231 functions as the energy absorber. In this example, the second thermoplastic 221 is composed of a different kind of resin from the first thermoplastic 211, but may alternatively be composed of the same kind of resin. That is, the resins 211 and 221 respectively exposed on first and second surfaces 20A and 20B of the adapter 20 are of different kinds, but may be of the same kind.

These preliminary sheets 21 to 23 may be preferably bonded to one another by any method as in the example of the adapter 10 shown in Fig. 1, but may be integrated with one another by a method other than the bonding, or do not have to be integrated with one another. In the case where the adapters 21 to 23 are integrated with one another, the adapter 20 is easily handled. In the case where the adapters 21 to 23 are not integrated with one another, they are integrated with one another to form the adapter 20 by microwave irradiation in the bonding step.

These preliminary sheets 21 to 23 also each have a thickness appropriately selected depending on the thickness of the adapter 20, and the thickness may fall within, for example, a range of 150 pm to 1,000 pm. The thicknesses of the first, second, and third preliminary sheets 21 to 23 may be equal to one another, or may be different from one another. These thicknesses may be changed depending on the portions of the adapter 20, in consideration of, for example, the flexibility required for the adapter 20. For example, the portions of the preliminary sheets 21 to 23 respectively corresponding to the flexibility imparting portions of a shoe member can each have a small thickness.

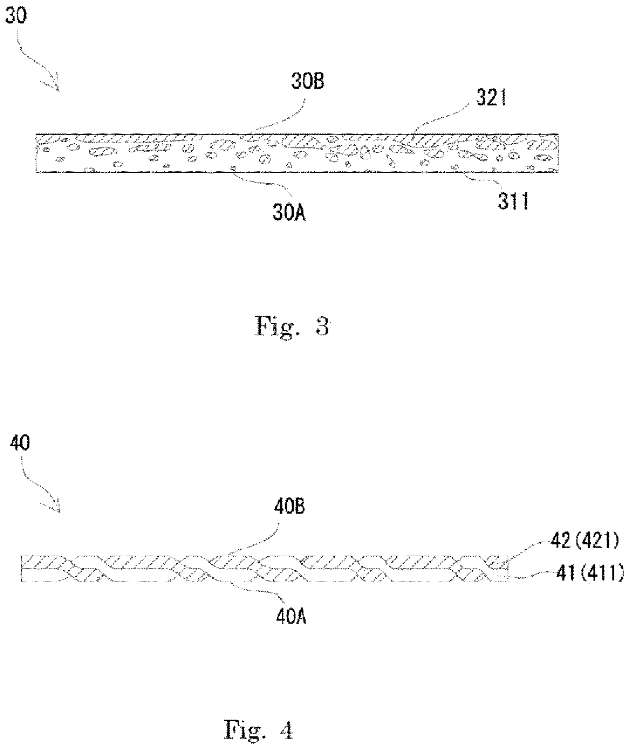

Fig. 3 shows still another example of the adapter. An adapter 30 is formed of a single sheet of a polymer blend in which a first thermoplastic 311 and a second thermoplastic 321 that differs in kind from the first thermoplastic 311 are mixed together. In this example, the second thermoplastic 321 functions as the energy absorber. In this example, the polymer blend in the single sheet has a structure in which the first thermoplastic 311 and the second thermoplastic 321 are phase-separated, and the first thermoplastic 311 is present at a higher ratio than the second thermoplastic 321 on a first surface 30A of the adapter, while the second thermoplastic 321 is present at a higher ratio than the first thermoplastic 311 on a second surface 30B of the adapter.

Fig. 4 shows still another example of the adapter. An adapter 40 includes a first resin fiber 41 mainly composed of a first thermoplastic 411 and a second resin fiber 42 mainly composed of a second thermoplastic 421 that differs in kind from the first thermoplastic 411, and the first resin fiber 41 and the second resin fiber 42 are interwoven together. In this example, the second thermoplastic 421 functions as the energy absorber. In this example, the first and second resin fibers 41 and 42 are exposed on both first and second surfaces 40A and 40B of the adapter 40, and the first resin fiber 41 is present at a higher ratio than the second resin fiber 42 on the first surface 40A, while the second resin fiber 42 is present at a higher ratio than the first resin fiber 41 on the second surface 40B.

In addition to the configurations shown in Fig. 1 to Fig. 4, the adapter of this embodiment may be configured to have the first thermoplastic and the energy absorber present therein in any manner, as long as the first thermoplastic, which differs from the energy absorber, is exposed on at least one surface of the adapter. For example, the adapter may be configured so that the energy absorber in any form, for example, a powder form, a fiber form, or a flake form is dispersed in a single sheet mainly composed of the first thermoplastic.

In the adapters shown in Fig. 1 to Fig. 4, the energy absorbers are thermoplastics, but the energy absorber may be a thermosetting resin, or may be an inorganic material. For example, the configuration may be such that an energy absorber composed of a thermosetting resin or an inorganic material is sandwiched between first and second preliminary sheets respectively composed mainly of first and second thermoplastics, or may be such that an energy absorber composed of an inorganic fiber is interwoven with a resin fiber composed mainly of a first thermoplastic.

### (Shoe member)

As first and second shoe members that are bonded to each other in the method for producing the shoe of this embodiment, any shoe members used for a shoe are selected. Examples of such shoe members include, as the first and second shoe members, a shoe sole member such as a midsole, an outsole, or a sock liner; a shoe reinforcing member such as a heel counter or a shank; an upper material; and a decorative material.

The combination of the first shoe member and the second shoe member is not particularly limited, and any combination of shoe members bonded to each other in the production of a shoe is selected. Examples of the combination of the first shoe member and the second shoe member include the combination of the midsole and the upper material, the combination of the midsole and the outsole, the combination of the midsole and the shank, and the combination of the upper material and the heel counter. The combination of the midsole and the upper material is preferably selected as the combination of the first shoe member and the second shoe member. Each of the first shoe member and the second shoe member may be a part of a specific member that can be generally regarded as a single shoe member. For example, the first shoe member and the second shoe member may respectively be a first component and a second component of a midsole that are bonded to each other to form a single midsole.

The first and second shoe members respectively have first and second bonded surfaces to which the first and second surfaces of the adapter are respectively bonded. The first bonded surface of the first shoe member is configured to be capable of being bonded to the first thermoplastic exposed on the first surface of the adapter, as aforementioned. It is preferable that a resin of the same kind as the first thermoplastic be exposed on the first bonded surface in terms of the bonding capability to the first surface. For example, in the case where the first thermoplastic is an EVA resin, the first bonded surface may also have an EVA resin exposed thereon. The second bonded surface of the second shoe member is configured to be capable of being bonded to any of the resins exposed on the second surface of the adapter, preferably a resin present at a higher ratio than any other resin on the second surface. For example, in the case where the second thermoplastic is present at a higher ratio than any other resin on the second surface, the second bonded surface is configured to be capable of being bonded to the second thermoplastic. It is preferable that a resin of the same kind as the second thermoplastic be also exposed on the second bonded surface in terms of the bonding capability to the second surface.

The first and second shoe members may include one or more members composed of any material such as a foam, a rubber, a cloth, a metal, a resin, or fibers, as long as they respectively include the first and second bonded surfaces as described above. For example, the first or second shoe member may be a shoe sole member composed of a foam.

### (Embodiment of producing method)

Next, a description will be given on a method for producing a shoe 1, which is an embodiment of the present invention, using the adapter 10 shown in Fig. 1 as the adapter, a midsole 2 as the first shoe member, and an upper material 3 as the second shoe member. The following embodiment is merely an example. The present invention is not limited to the following embodiment at all.

First, a preparation step of preparing the adapter 10 shown in Fig. 1 is performed.

The step may include preparing the adapter 10 from a preliminary member (in this embodiment the first and second preliminary sheets 11 and 12) of the adapter 10. For example, in the step, the adapter 10 may be prepared by applying the aforementioned primer to at least one surface of each of the first and second preliminary sheets 11 and 12 for causing these sheets to be bonded to each other, followed by causing these sheets to be bonded to each other via the at least one surface to which the primer is applied.

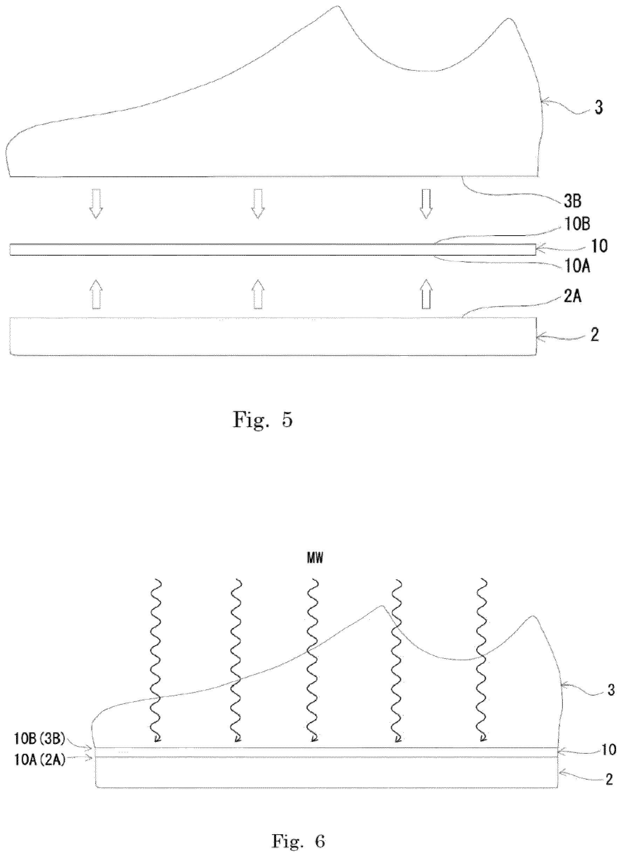

Performed next is, as shown in Fig. 5, a contacting step of bringing the first bonded surface 2A of the midsole 2 as the first shoe member into abutting contact with the first surface 10A of the adapter 10, and bringing the second bonded surface 3B of the upper material 3 as the second shoe member into abutting contact with the second surface 10B of the adapter 10. In this embodiment, the bonded surface 2A of the midsole 2 and the bonded surface 3B of the upper material 3 are held in tight contact respectively with the entire first and second surfaces 10A and 10B of the adapter 10.

Optionally, a primer application step of applying the primer on at least any one of the first surface 10A, the second surface 10B, the first bonded surface 2A, and the second bonded surface 3B may be performed before bringing the first and second bonded surfaces 2A and 3B respectively into abutting contact with the first and second surfaces 10A and 10B in this step. In such a case, the first bonded surface 2A and/or the second bonded surface 3B can be subjected to surface modification treatment. Use of the water-based primer improves the heating characteristics of an interface resulting from water included in the primer. After the water-based primer is applied, it is preferable to transfer to the bonding step before water is completely lost by drying to perform microwave irradiation, so that the effect of the improved heating characteristics can be exhibited. The microwave irradiation is preferably performed in the state where the coated film of the primer includes 0.1% or more water. Similarly, the water-based primer may be applied to the first and second preliminary sheets 11 and 12 in this step in the case where the adapter 10 is not integrally formed. The primer applied in the primer application step is preferably a water-based primer. Examples of such a water-based primer include a polyolefin-based emulsion, an EVA-based emulsion, an acrylic emulsion, and a urethane-based emulsion.

In the contacting step, the contacting state of the contact surfaces can be preliminarily fixed by a given method. For example, these contact surfaces may be preliminarily bonded to each other by the bonding force of the resins themselves exposed on the contact surfaces, or by, for example, a double-sided tape or a pressure-sensitive bonding tape. In addition thereto or in substitution therefor, the contact surfaces may be physically fixed to each other by, for example, the method in which the contact surfaces between the bonded surfaces 2A and 3B and the first and second surfaces 10A and 10B are held clamped so as to be pressed using, for example, a jig such as a clamp from the outside of the bonded surfaces 2A and 3B, or the method in which a shoe last is placed into the upper material 3 to hold the contact surfaces pressed toward the midsole 2 arranged downward of the shoe last. A plurality of these fixing methods may be combined.

Performed after the contacting step is, as shown in Fig. 6, the bonding step of heating and melting the adapter 10 by irradiating the adapter 10 with microwaves. When the adapter 10 is irradiated with microwaves, the second thermoplastic 121 that serves as the energy absorber included in the second preliminary sheet 12 constituting a part of the adapter 10 absorbs the microwaves to thereby cause the second preliminary sheet 12 to generate heat. The heat generated from the second preliminary sheet 12 is transferred to the adjacent first preliminary sheet 11, and is thus consequently transferred across the entire adapter 10 to heat and melt the entire adapter 10. In the thus heated and molten adapter 10, the first thermoplastic 111 exposed on the first surface 10A is bonded to the first bonded surface 2A of the midsole 2 that is in contact with the first surface 10A, and the second thermoplastic 121 exposed on the second surface 10B is bonded to the second bonded surface 3B of the upper material 3 that is in contact with the second surface 10B. Thus, the midsole 2 and the upper material 3 are bonded to each other via the adapter 10.

The microwaves irradiated in this step have such a frequency as to be capable of heating the energy absorber included in the adapter 10. The frequency is determined depending on the type of the energy absorber, falls within, for example, a range of 300 MHz to 300 GHz, preferably a range of 600 MHz to 10 GHz, more preferably a range of 1,000 MHz to 3 GHz, and is, for example, 2.4 GHz. The intensity and duration of microwave irradiation are not particularly limited, and can be such an intensity and duration as to be capable of sufficiently heating the energy absorber to heat and melt the adapter 10.

In this step, as shown in Fig. 6, the midsole 2 and the upper material 3 that are in contact with the adapter 10 may also be irradiated with microwaves at the time of irradiating the adapter 10 with microwaves. However, in the case where the midsole 2 or the upper material 3 includes a portion that may be heated with microwaves but does not work on bonding, it is preferable that such a portion be avoided from being irradiated with microwaves wherever possible to avoid any adverse effect caused by heating the portion. A shielding member may also be used to prevent the portion from being irradiated with microwaves.

In the step, the contact surfaces between the first and second surfaces 10A and 10B and the first and second bonded surfaces 2A and 3B may be pressed by the method using the clamp, the shoe last, or the like as aforementioned, while the adapter 10 is irradiated with microwaves or while the heated adapter 10 is in a molten state. The midsole 2 and the upper material 3 are thus pressure bonded to more securely cause these members to be bonded to each other. A plurality of these pressure bonding methods may be combined.

The bonding of the midsole 2 and the upper material 3 is generally completed when the heated and molten adapter 10 is cooled to solidify the first and second thermoplastics 111 and 121 included in the adapter 10. The method for cooling the heated and molten adapter 10 is not particularly limited, and is for example performed by simply leaving the adapter 10 to stand under a normal temperature environment.

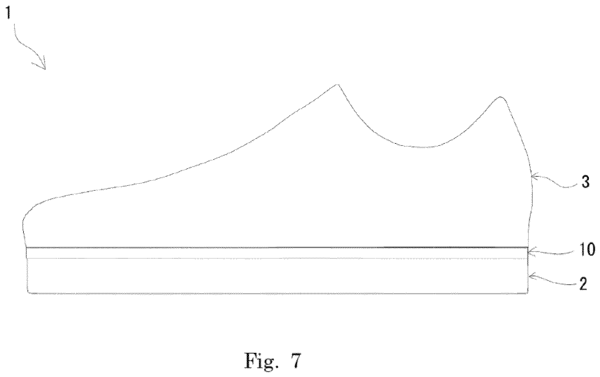

Performing these steps enables the production of the shoe 1 that includes the midsole 2 as the first shoe member and the upper material 3 as the second shoe member being bonded to each other via the adapter 10, as shown in Fig. 7. In this method, the second thermoplastic 121 that is the energy absorber included in the adapter 10 is microwave-heated to thereby enable the entire adapter 10 including the first thermoplastic 111 to be heated and molten by the generated heat. Thus, even if the first thermoplastic 111 exposed on the first surface 10A of the adapter is a resin that is hardly microwave-heated, the first thermoplastic 111 can still be heated and molten using microwaves to be used as a bonding element of the first and second shoe members 2 and 3. Therefore, according to the method for producing the shoe 1 of this embodiment, the shoe members can be easily bonded to each other by microwave heating while a thermoplastic that is in general hardly heated by microwaves is used as a bonding element of the shoe members.

In this embodiment, the first and second thermoplastics 111 and 121 exposed respectively on the first and second surfaces 10A and 10B of the adapter 10 differ in kind from each other; thus, the first and second surfaces 10A and 10B have different bonding capabilities from each other. Therefore, the first and second shoe members 2 and 3 respectively including the bonded surfaces 2A and 3B that have different bonding capabilities to a resin and are difficult to be directly bonded to each other can easily be bonded to each other via the adapter 10.

### (Shoe)

The shoe of this embodiment is a shoe that can be produced by the aforementioned method for producing the shoe, such as the shoe 1 shown in Fig. 7.

The shoe of this embodiment includes: an adapter including a first thermoplastic and an energy absorber having a higher dielectric loss factor relative to microwaves than that of the first thermoplastic, the adapter having a first surface and a second surface opposite to the first surface and having the first thermoplastic exposed at least on the first surface; a first shoe member that is bonded to the first surface; and a second shoe member that is bonded to the second surface.

The adapter, the first shoe member, and the second shoe member that have been mentioned in describing the method for producing the shoe can be employed. In the description on the shoe, the term "microwave(s)" herein refers to any microwave having a frequency of 300 MHz to 300 GHz.

In the shoe of this embodiment, the first shoe member and the second shoe member can be firmly bonded to each other via the aforementioned adapter. The bonding strength between the first shoe member and the second shoe member is preferably 6.25 kgf/25 mm (180-degree peel strength according to JIS K 6854) or more.

As described above, the method for producing the shoe according to this embodiment includes: a preparation step of preparing an adapter that at least includes a first thermoplastic and an energy absorber having a higher dielectric loss factor than that of the first thermoplastic, the adapter having a first surface and a second surface opposite to the first surface and having the first thermoplastic exposed at least on the first surface; a contacting step of bringing the first bonded surface formed on the first shoe member into abutting contact with the first surface and bringing the second bonded surface formed on the second shoe member into abutting contact with the second surface; and a bonding step of heating and melting the adapter by irradiating the adapter with microwaves after the contacting step to cause the first shoe member and the second shoe member to be bonded to each other via the adapter. The aforementioned invention enables the shoe members to be easily bonded to each other by microwave heating while the first thermoplastic that is in general hardly heated by microwaves is used as a bonding element of the shoe members.

According to the claimed invention, the adapter includes a second thermoplastic that differs in kind from the first thermoplastic, the first thermoplastic is present at a higher ratio than the second thermoplastic on the first surface, and the second thermoplastic is present at a higher ratio than the first thermoplastic on the second surface. In such a case, the first and second shoe members respectively having the first and second bonded surfaces that have different bonding capabilities to a resin and are difficult to be directly bonded to each other can be easily bonded to each other via the adapter having the first and second thermoplastics present at different ratios respectively on the first and second surfaces.

It is preferable that the energy absorber be a thermoplastic or be the second thermoplastic. In such a case, the second thermoplastic that controls the bonding capability of the second bonded surface serves also as the energy absorber; thus, the adapter that can be easily heated by microwaves can be used while reducing the use of materials that do not contribute to the bonding function. For example, the energy absorber may be a TPU resin.

The adapter may include two or more preliminary sheets laminated on each other. In such a case, the aforementioned adapter can be easily prepared by laminating the plurality of preliminary sheets including different materials on each other.

The first thermoplastic may be, for example, an EVA resin. Although the EVA resin is relatively difficult to be microwave-heated, the method for producing the shoe of this embodiment enables the adapter including the EVA resin to be heated using microwaves, and thus enables the EVA resin to be used as a bonding element. In this case, it is preferable that the EVA resin or the polyethylene resin be exposed on the first bonded surface of the first shoe member, in terms of the bonding capability to the first shoe member.

The aforementioned method may further include a primer application step of applying a water-based primer to at least one of the first surface, the second surface, the first bonded surface, and the second bonded surface before the contacting step, as aforementioned. Use of a water-based primer is advantageous also in improving the working environment, as compared with the case where a primer including an organic solvent is used as a solvent. Thus, the aforementioned method can be easily performed at a site other than a shoe factory equipped with an exhaust treatment system.

The method for producing the shoe of this embodiment does not necessitate any large-scale equipment, and thus can be easily performed at a side other than a shoe factory. In particular, use of a water-based primer improves the bonding capability between the shoe members in the bonding step, and can thus downsize the equipment for microwave irradiation. This method can also reduce the environmental load, and can therefore be performed, for example, at a shoe retailer. Further, according to the method for producing the shoe of this embodiment, custom-made shoes according to the preferences of a user can be produced by selecting a combination of an upper material, a midsole, and the like at a retailer.

The shoe according to this embodiment includes: an adapter including a first thermoplastic and an energy absorber having a higher dielectric loss factor relative to microwaves than that of the first thermoplastic, the adapter having a first surface and a second surface opposite to the first surface and having the first thermoplastic exposed at least on the first surface; a first shoe member bonded to the first surface; and a second shoe member bonded to the second surface. According to the aforementioned invention, provided can be the shoe including the shoe members being bonded to each other by microwave heating while the first thermoplastic that is in general hardly heated by microwaves is used as a bonding element of the shoe members.

According to the claimed invention, the adapter includes a second thermoplastic that differs in kind from the first thermoplastic, the first thermoplastic is present at a higher ratio than the second thermoplastic on the first surface, and the second thermoplastic is present at a higher ratio than the first thermoplastic on the second surface. In such a case, provided can be the shoe in which the first and second shoe members respectively having the first and second bonded surfaces that have different bonding capabilities to a resin and are difficult to be directly bonded to each other are bonded to each other via the adapter.

It is preferable that the energy absorber be a thermoplastic or be the second thermoplastic. In such a case, the second thermoplastic that controls the bonding capability of the second bonded surface serves also as the energy absorber; thus, the adapter that can be easily heated by microwaves can be used while reducing the use of materials that do not contribute to the bonding function. For example, the energy absorber may be a TPU resin.

The first thermoplastic may be, for example, an EVA resin. Although the EVA resin is relatively difficult to be microwave-heated, the method for producing the shoe of this embodiment enables the adapter including the EVA resin to be heated using microwaves, and thus enables the EVA resin to be used as a bonding element. In this case, it is preferable that the EVA resin or polyethylene resin be exposed on the bonded surface of the first shoe member to which the first surface is bonded, in terms of the bonding capability to the first shoe member.

### REFERENCE SIGNS LIST

1: Shoe
2: First shoe member (midsole)
2A: First bonded surface
3: Second shoe member (upper material)
3B: Second bonded surface
10, 20, 30, 40: Adapter
10A, 20A, 30A, 40A: First surface
10B, 20B, 30B, 40B: Second surface
11, 21: First preliminary sheet
12, 22: Second preliminary sheet
23: Third preliminary sheet
41: First resin fiber
42: Second resin fiber
111, 211, 311, 411: First thermoplastic
121, 221, 321, 421: Second thermoplastic

## Claims

1. A method for producing a shoe, the method comprising:
a preparation step of preparing an adapter (10, 20, 30, 40) that at least comprises a first thermoplastic (111, 211, 311, 411) and an energy absorber having a higher dielectric loss factor than that of the first thermoplastic, the adapter having a first surface and a second surface opposite to the first surface and having the first thermoplastic exposed at least on the first surface;
a contacting step of bringing a first bonded surface (2A) formed on a first shoe member into abutting contact with the first surface and bringing a second bonded surface (3B) formed on a second shoe member into abutting contact with the second surface; and a bonding step of heating and melting the adapter by irradiating the adapter with microwaves after the contacting step to cause the first shoe member and the second shoe member to be bonded to each other via the adapter, wherein
the adapter comprises a second thermoplastic (121, 221, 321, 421) that differs in kind from the first thermoplastic,
the first thermoplastic is present at a higher ratio than the second thermoplastic on the first surface, and
the second thermoplastic is present at a higher ratio than the first thermoplastic on the second surface.

2. The method for producing the shoe according to claim 1, wherein
the energy absorber is a thermoplastic.

3. The method for producing the shoe according to claim 1, wherein
the energy absorber is the second thermoplastic.

4. The method for producing the shoe according to claim 2 or 3, wherein the energy absorber is a TPU resin.

5. The method for producing the shoe according to any one of claims 1 to 4, wherein
the adapter comprises two or more preliminary sheets laminated on each other.

6. The method for producing the shoe according to any one of claims 1 to 5, wherein
the first thermoplastic is an EVA resin.

7. The method for producing the shoe according to claim 6, wherein
the EVA resin or a polyethylene resin is exposed on the first bonded surface of the first shoe member.

8. The method for producing the shoe according to any one of claims 1 to 7, the method further comprising a primer application step of applying a water-based primer to at least one of the first surface, the second surface, the first bonded surface, and the second bonded surface.

9. A shoe comprising:
an adapter (10, 20, 30, 40) comprising a first thermoplastic (111, 121, 311, 411) and an energy absorber having a higher dielectric loss factor relative to microwaves than that of the first thermoplastic, the adapter having a first surface and a second surface opposite to the first surface and having the first thermoplastic exposed at least on the first surface;
a first shoe member (2) bonded to the first surface; and
a second shoe member (3) bonded to the second surface,
wherein the adapter comprises a second thermoplastic (121, 221, 321, 421) that differs in kind from the first thermoplastic,
the first thermoplastic is present at a higher ratio than the second thermoplastic on the first surface, and
the second thermoplastic is present at a higher ratio than the first thermoplastic on the second surface.

10. The shoe according to claim 9, wherein
the energy absorber is a thermoplastic.

11. The shoe according to claim 9, wherein
the energy absorber is the second thermoplastic.

12. The shoe according to claim 10 or 11, wherein
the energy absorber is a TPU resin.

13. The shoe according to any one of claims 9 to 12, wherein
the first thermoplastic is an EVA resin.

14. The shoe according to claim 13, wherein
the EVA resin or a polyethylene resin is exposed on the first bonded surface of the first shoe member.

## Patentansprüche

1. Verfahren zur Herstellung eines Schuhs, wobei das Verfahren umfasst:
einen Herstellungsschritt des Herstellens eines Adapters (10, 20, 30, 40), der zumindest einen ersten Thermoplast (111, 211, 311, 411) und einen Energieabsorber, der einen höheren dielektrischen Verlustfaktor als der des ersten Thermoplasts aufweist, umfasst, wobei der Adapter eine erste Oberfläche und eine der ersten Oberfläche gegenüberliegende zweite Oberfläche aufweist und der erste Thermoplast zumindest auf der ersten Oberfläche freiliegt;
einen Kontaktierungsschritt, bei dem eine erste Verbundoberfläche (2A), die auf einem ersten Schuhelement ausgebildet ist, in anliegenden Kontakt mit der ersten Oberfläche gebracht wird und eine zweite Verbundoberfläche (3A), die auf einem zweiten Schuhelement ausgebildet ist, in anliegenden Kontakt mit der zweiten Oberfläche gebracht wird; und
einen Bindungsschritt des Erwärmens und Schmelzens des Adapters durch Bestrahlen des Adapters mit Mikrowellen nach dem Kontaktierungsschritt, um zu bewirken, dass das erste Schuhelement und das zweite Schuhelement über den Adapter aneinander geden werden, wobei
der Adapter einen zweiten Thermoplast (121, 221, 321, 421) umfasst, der sich in seiner Art von dem ersten Thermoplast unterscheidet,
der erste Thermoplast in einem höheren Verhältnis als der zweite Thermoplast auf der ersten Oberfläche vorhanden ist, und
der zweite Thermoplast in einem höheren Verhältnis als der erste Thermoplast auf der zweiten Oberfläche vorhanden ist.

2. Verfahren zur Herstellung des Schuhs nach Anspruch 1, wobei der Energieabsorber ein Thermoplast ist.

3. Verfahren zur Herstellung des Schuhs nach Anspruch 1, wobei der Energieabsorber der zweite Thermoplast ist.

4. Verfahren zur Herstellung des Schuhs nach Anspruch 2 oder 3, wobei der Energieabsorber ein TPU-Harz ist.

5. Verfahren zur Herstellung des Schuhs nach einem der Ansprüche 1 bis 4, wobei der Adapter zwei oder mehr aufeinander laminierte Vorläufersheets umfasst.

6. Verfahren zur Herstellung des Schuhs nach einem der Ansprüche 1 bis 5, wobei der erste Thermoplast ein EVA-Harz ist.

7. Verfahren zur Herstellung des Schuhs nach Anspruch 6, wobei das EVA-Harz oder ein Polyethylenharz auf der ersten Verbundoberfläche des ersten Schuhelements freigelegt wird.

8. Verfahren zur Herstellung des Schuhs nach einem der Ansprüche 1 bis 7, wobei das Verfahren des Weiteren einen Primer-Auftragsschritt umfasst, bei dem ein Primer auf Wasserbasis auf mindestens eine der ersten Oberfläche, der zweiten Oberfläche, der ersten Verbundoberfläche und der zweiten Verbundoberfläche aufgetragen wird.

9. Ein Schuh, umfassend:
einen Adapter (10, 20, 30, 40), der einen ersten Thermoplast (111, 211, 311, 411) und einen Energieabsorber, der einen höheren dielektrischen Verlustfaktor gegenüber Mikrowellen als der des ersten Thermoplasts aufweist, umfasst, wobei der Adapter eine erste Oberfläche und eine der ersten Oberfläche gegenüberliegende zweite Oberfläche aufweist und der erste Thermoplast zumindest auf der ersten Oberfläche freiliegt
ein erstes Schuhelement (2), das an die erste Oberfläche gebunden ist; und
ein zweites Schuhelement (3), das an die zweite Oberfläche gebunden ist,
wobei der Adapter einen zweiten Thermoplast (121, 221, 321, 421) umfasst, der sich in seiner Art von dem ersten Thermoplast unterscheidet,
der erste Thermoplast in einem höheren Verhältnis als der zweite Thermoplast auf der ersten Oberfläche vorhanden ist, und
der zweite Thermoplast in einem höheren Verhältnis als der erste Thermoplast auf der zweiten Oberfläche vorhanden ist.

10. Schuh nach Anspruch 9, wobei der Energieabsorber ein Thermoplast ist.

11. Schuh nach Anspruch 9, wobei der Energieabsorber der zweite Thermoplast ist.

12. Schuh nach Anspruch 10 oder 11, wobei der Energieabsorber ein TPU-Harz ist.

13. Schuh nach einem der Ansprüche 9 bis 12, wobei der erste Thermoplast ein EVA-Harz ist.

14. Schuh nach Anspruch 13, wobei das EVA-Harz oder ein Polyethylenharz auf der ersten Verbundoberfläche des ersten Schuhelements freiliegt.

## Revendications

1. Procédé de fabrication d'une chaussure, le procédé comprenant :
une étape de préparation d'un adaptateur (10, 20, 30, 40) qui comprend au moins un premier thermoplastique (111, 211, 311, 411) et un absorbeur d'énergie ayant un facteur de perte diélectrique plus élevé que celui du premier thermoplastique, l'adaptateur ayant une première surface et une seconde surface opposée à la première surface et ayant le premier thermoplastique exposé au moins sur la première surface ;
une étape de contact consistant à amener une première surface collée (2A) formée sur un premier élément de chaussure en contact avec la première surface et à amener une seconde surface collée (3B) formée sur un second élément de chaussure en contact avec la seconde surface ; et
une étape de collage consistant à chauffer et à faire fondre l'adaptateur en irradiant l'adaptateur avec des micro-ondes après l'étape de mise en contact pour faire en sorte que le premier élément de chaussure et le second élément de chaussure soient collés l'un à l'autre par l'intermédiaire de l'adaptateur, dans lequel
l'adaptateur comprend un second thermoplastique (121, 221, 321, 421) qui diffère en nature du premier thermoplastique,
le premier thermoplastique est présent dans une proportion plus élevée que le second thermoplastique sur la première surface, et
le second thermoplastique est présent dans une proportion plus élevée que le premier thermoplastique sur la seconde surface.

2. Procédé de fabrication de la chaussure selon la revendication 1, dans lequel l'absorbeur d'énergie est un thermoplastique.

3. Procédé de fabrication de la chaussure selon la revendication 1, dans lequel l'absorbeur d'énergie est le second thermoplastique.

4. Procédé de fabrication de la chaussure selon la revendication 2 ou 3, dans lequel l'absorbeur d'énergie est une résine TPU.

5. Procédé de fabrication de la chaussure selon l'une quelconque des revendications 1 à 4, dans lequel
l'adaptateur comprend deux ou plusieurs feuilles préliminaires laminées l'une sur l'autre.

6. Procédé de fabrication de la chaussure selon l'une quelconque des revendications 1 à 5, dans lequel
le premier thermoplastique est une résine EVA.

7. Procédé de fabrication de la chaussure selon la revendication 6, dans lequel
la résine EVA ou une résine de polyéthylène est exposée sur la première surface collée du premier élément de chaussure.

8. Procédé de fabrication de la chaussure selon l'une quelconque des revendications 1 à 7, comprenant en outre une étape d'application d'apprêt pour appliquer un apprêt à base d'eau sur au moins l'une des surfaces suivantes : la première surface, la seconde surface, la première surface collée et la seconde surface collée.

9. Chaussure comprenant :
un adaptateur (10, 20, 30, 40) comprenant un premier thermoplastique (111, 121, 311, 411) et un absorbeur d'énergie ayant un facteur de perte diélectrique par rapport aux micro-ondes plus élevé que celui du premier thermoplastique, l'adaptateur ayant une première surface et une seconde surface opposée à la première surface et ayant le premier thermoplastique exposé au moins sur la première surface ;
un premier élément de chaussure (2) collé à la première surface ; et
un second élément de chaussure (3) collé à la seconde surface,
dans lequel l'adaptateur comprend un second thermoplastique (121, 221, 321, 421) qui diffère en nature du premier thermoplastique,
le premier thermoplastique est présent dans une proportion plus élevée que le second thermoplastique sur la première surface, et
le second thermoplastique est présent dans une proportion plus élevée que le premier thermoplastique sur la seconde surface.

10. Chaussure selon la revendication 9, dans laquelle
l'absorbeur d'énergie est un thermoplastique.

11. Chaussure selon la revendication 9, dans laquelle
l'absorbeur d'énergie est le second thermoplastique.

12. Chaussure selon la revendication 10 ou 11, dans laquelle
l'absorbeur d'énergie est une résine TPU.

13. Chaussure selon l'une quelconque des revendications 9 à 12, dans laquelle le premier thermoplastique est une résine EVA.

14. Chaussure selon la revendication 13, dans laquelle
la résine EVA ou une résine de polyéthylène est exposée sur la première surface collée du premier élément de chaussure.
